# EUROPÄISCHE PATENTANMELDUNG

(11) **EP 3 771 225 A1**
(43) Veröffentlichungstag der Anmeldung: **27.01.2021**
(21) Anmeldenummer: 20185146.6
(22) Anmeldetag: 10.07.2020
(51) Int. Cl.: H04R 25/00, H02J 7/00, H01R 11/30

(54) **LADEKONTAKTANSCHLUSS FÜR EIN LADEGERÄT, GEGENKONTAKTANSCHLUSS, LADEKONTAKTSYSTEM UND ELEKTRISCHES GERÄT**

(30) Priorität: 25.07.2019 DE 102019211043
(71) Anmelder: Sivantos Pte. Ltd., Singapore 539775 (SG)
(72) Erfinder: BIN SHITH, Muhammad Shahid, 641561 Singapur (SG); DING, Lit Song, 321102 Singapur (SG); Krämer, Beate Anna Maria, 90768 Fürth (DE)
(74) Vertreter: FDST Patentanwälte

(57) **Zusammenfassung**

Die Erfindung betrifft einen Ladekontaktanschluss (12) für ein Ladegerät insbesondere eines Hörgeräts (1). Der Ladekontaktanschluss (12) umfasst dabei einen permanentmagnetischen Magnetelement (26) zur magnetischen Anziehung eines Gegenkontaktanschlusses (6), einen zentralen Kontaktstift (14) zur Kontaktierung eines ersten Gegenkontakts (8) des Gegenkontaktanschlusses (6) und einen den zentralen Kontaktstift (14) ringartig umgebenden Kontaktmantel (16), der eine schräg und/oder senkrecht zu einer Längsachse des Kontaktstifts (14) ausgerichtete Kontaktfläche (20) zur Kontaktierung eines zweiten Gegenkontakts (10) des Gegenkontaktanschlusses (6) aufweist. Der Kontaktmantel (16) ist dabei gegen den Kontaktstift (14) elektrisch isoliert, und der Kontaktmantel (16) umgibt das Magnetelement (26) zumindest teilweise.

## Beschreibung

Die Erfindung betrifft einen Ladekontaktanschluss für ein Ladegerät, das zum Laden eines elektrischen Geräts, insbesondere eines Hörgeräts dient. Des Weiteren betrifft die Erfindung einen Gegenkontaktanschluss, der insbesondere das Gegenstück zum Ladekontaktanschluss bildet. Außerdem betrifft die Erfindung ein Ladekontaktsystem sowie ein elektrisches Gerät, insbesondere ein Hörgerät.

Geräte, die mit wieder aufladbaren Batterien betrieben werden, weisen häufig Anschlüsse auf, um eine elektrische Kontaktierung mit einem Ladegerät herzustellen und somit beim Aufladen der wieder aufladbaren Batterien diese innerhalb des Geräts belassen zu können. Häufig kommen dabei proprietäre Anschlüsse zum Einsatz. Aus dem Mobiltelefon-Bereich ist es allerdings zwischenzeitlich bekannt, dass eine Vielzahl von Anbietern auf Standard-Systeme zurückgreifen. Teilweise kommen bei Geräten mit wieder aufladbaren Batterien auch sogenannte Klinkenstecker zum Einsatz. Diese Systeme haben dabei häufig den Nachteil, dass die zur Herstellung der Kontaktierung erforderlichen Einsteck-Wege meist vergleichsweise lang sind und dadurch ein möglichst "blindes" Finden und einfaches Verbinden der korrespondierenden Anschlüsse insbesondere in Ladeschalen aufweisenden Ladegeräten erschwert ist. Oftmals kommen deshalb in diesem Bereich vergleichsweise flach bauende Federkontakte zum Einsatz. Letzteres ist bspw. aus dem Bereich von kabellosen Festnetztelefonen bekannt.

Der Erfindung liegt die Aufgabe zugrunde, die Kontaktierung korrespondierender Ladekontakte zu vereinfachen.

Diese Aufgabe wird erfindungsgemäß gelöst durch einen Ladekontaktanschluss mit den Merkmalen des Anspruchs 1. Des Weiteren wird diese Aufgabe erfindungsgemäß gelöst durch einen Gegenkontaktanschluss mit den Merkmalen des Anspruchs 8. Ferner wird die Aufgabe erfindungsgemäß gelöst durch ein Ladekontaktsystem mit den Merkmalen des Anspruchs 10. Außerdem wird diese Aufgabe erfindungsgemäß gelöst durch ein elektrisches Gerät, insbesondere ein Hörgerät mit den Merkmalen des Anspruchs 11. Weitere vorteilhafte und teils für sich erfinderische Ausführungsformen und Weiterentwicklungen sind in den Unteransprüchen und der nachfolgenden Beschreibung dargelegt.

Der erfindungsgemäße Ladekontaktanschluss ist zum Einsatz in einem Ladegerät eingerichtet und vorgesehen. Dieses Ladegerät dient insbesondere zum Aufladen eines (mittels einer wieder auf ladbaren Batterie betriebenen) elektrischen Geräts, insbesondere eines Hörgeräts, vorzugsweise eines Hörhilfegeräts zur Versorgung einer Person mit einer Hörminderung. Der Ladekontaktanschluss weist dabei ein permanentmagnetisches Magnetelement zur magnetischen Anziehung eines Gegenkontaktanschlusses (insbesondere des Hörgeräts) auf. Des Weiteren weist der Ladekontaktanschluss einen zentralen Kontaktstift (auf, der zur Kontaktierung eines ersten Gegenkontakts des Gegenkontaktanschlusses dient. Ferner weist der Ladekontaktanschluss einen den zentralen Kontaktstift ringartig umgebenden Kontaktmantel auf, der eine schräg und/oder senkrecht zu einer Längsachse des Kontaktstifts ausgerichtete Kontaktfläche zur Kontaktierung eines zweiten Gegenkontakts des Gegenkontaktanschlusses umfasst. Der Kontaktmantel ist dabei gegen den Kontaktstift elektrisch isoliert. Außerdem umgibt der Kontaktmantel das Magnetelement zumindest teilweise.

Die beiden durch den Kontaktstift und den Kontaktmantel gebildeten Anschlusskontakte sind somit ineinander geschachtelt, sodass die Baugröße des Ladekontaktanschlusses vorteilhaft reduziert werden kann. Das Magnetelement ermöglicht zudem, dass der Ladekontaktanschluss sowie der Gegenkontaktanschluss zur Kontaktierung nur "nahe" zueinander positioniert werden brauchen. Bei hinreichend geringem Abstand ermöglicht die magnetische Anziehungskraft eine nahezu automatische Kopplung der einander zugeordneten Anschlusskontakte.

Vorzugsweise ist der Kontaktstift als Federkontaktstift ausgebildet. Insbesondere weist der Kontaktstift in diesem Fall eine federnd gelagerte Kontaktspitze auf und wird hierbei auch als "Pogo Pin" bezeichnet. Durch die Ausbildung als Federkontaktstift werden ein Toleranzausgleich sowie eine vergleichsweise fehlersichere Kontaktierung der entsprechenden Gegenkontakte ermöglicht.

In einer bevorzugten Ausführung ist zumindest die Kontaktfläche des Kontaktmantels rotationssymmetrisch bezüglich der Längsachse des Kontaktstifts ausgeführt. Der Kontaktstift und die Kontaktfläche, insbesondere der gesamte Kontaktmantel sind mithin konzentrisch zueinander angeordnet. Dadurch wird eine rotatorisch beliebige Ausrichtung des Ladekontaktanschlusses zu dem Gegenkontaktanschluss bei der Kontaktierung ermöglicht.

In einer weiteren bevorzugten Ausführung umgibt der Kontaktmantel das Magnetelement topfartig. Vorzugsweise bildet dabei die Kontaktfläche des Kontaktmantels den "Topfboden" und ein insbesondere parallel zum Kontaktstift verlaufender Wandabschnitt des Kontaktmantels die "Topfseitenwand".

In einer zweckmäßigen Ausführung ist das Magnetelement elektrisch leitfähig ausgestaltet und bildet eine elektrische Verbindung zwischen dem Kontaktmantel und einer dem Ladekontaktanschluss nachgelagerten elektrischen Leitung. Dadurch wird die Bauteilintegration des Ladekontaktanschlusses weiter gesteigert und die Bauteilanzahl entsprechend reduziert. Dadurch kann auch Bauraum eingespart werden.

In einer weiteren zweckmäßigen Ausführung ist auch das Magnetelement vorzugsweise rotationssymmetrisch bezüglich der Längsachse des Kontaktstifts ausgebildet und umgibt diesen insbesondere hülsenartig.

Bevorzugt ist das Magnetelement zumindest abschnittsweise in den Kontaktmantel eingepasst.

Zweckmäßigerweise durchdringt der Kontaktstift - insbesondere in der rotationssymmetrischen Ausführung des Kontaktmantels - die Kontaktfläche des Kontaktmantels durch eine zugeordnete Öffnung. Insbesondere steht der Kontaktstift dabei auch freiendseitig über die Kontaktfläche über. Zweckmäßigerweise ist hierbei der zugeordnete erste Gegenkontakt für den Kontaktstift gegenüber dem zweiten Gegenkontakt zurückversetzt, sodass der Kontaktstift mit seinem überstehenden Freiende (auch: "Kontaktende") insbesondere bei der Kontaktierung des Gegenkontaktanschlusses eine zentrierende Wirkung entfaltet.

In einer bevorzugten Ausführung ist der Kontaktstift zumindest in einem Kontaktbereich zu dem Magnetelement und zu dem Kontaktmantel mit isolierendem Material überzogen. Das isolierende Material bildet dabei vorzugsweise eine Hülse, die über den Kontaktstift geschoben ist. Alternativ handelt es sich bei dem isolierenden Material um eine Art Lack, der auf den Kontaktstift aufgetragen ist.

In einer optionalen Ausführung ist das Magnetelement als kunststoffgebundener Permanentmagnet ausgebildet.

Vorzugsweise sind der Kontaktstift sowie der Kontaktmantel aus einem, gegebenenfalls (insbesondere zur Erhöhung der Leitfähigkeit) beschichteten Metall gebildet.

Der erfindungsgemäße Gegenkontaktanschluss ist vorzugsweise zur Kopplung mit dem vorstehend beschriebenen Ladekontaktanschluss eingerichtet und vorgesehen. Der Gegenkontaktanschluss weist dazu den vorstehend genannten ersten Gegenkontakt zur Kontaktierung mit dem Kontaktstift sowie den zweiten, den ersten Gegenkontakt ringartig umgebenden Gegenkontakt zur Kontaktierung mit der Kontaktfläche des Kontaktmantels auf. Dabei ist zumindest der zweite Gegenkontakt aus ferrimagnetischem oder ferromagnetischem Material gebildet. Dadurch wird vorteilhaft ermöglicht, dass ein externes magnetisches Bauteil, vorzugsweise das im Ladekontaktanschluss angeordnete Magnetelement eine magnetische Anziehungskraft zumindest auf den zweiten Gegenkontakt ausübt, so dass eine Kopplung vereinfacht und eine zumindest gewisse Fixierung aneinander ermöglicht wird. Der Gegenkontaktanschluss ist außerdem zum Einbau in das elektrische Gerät, insbesondere das Hörgerät (konkret das Hörhilfegerät) eingerichtet und vorgesehen.

In einer zweckmäßigen Ausführung ist der erste Gegenkontakt gegenüber einer Kontaktfläche (die zur Anlage an der Kontaktfläche des Kontaktmantels eingerichtet und vorgesehen ist) des zweiten Gegenkontakts zurückversetzt. Zusätzlich oder alternativ sind der erste und der zweite Gegenkontakt mittels eines elektrisch isolierenden Zwischenstücks miteinander (mechanisch) verbunden. Durch Letzteres wird vorteilhafterweise ein Kurzschluss zwischen dem ersten und dem zweiten Gegenkontakt verhindert. Durch die zurückversetzte Ausführung des ersten Gegenkontakts wird insbesondere die vorstehend beschriebene zentrierende Wirkung des vorzugsweise über die Kontaktfläche des Kontaktmantels überstehenden Kontaktstifts gefördert.

Vorzugsweise ist der erste Gegenkontakt zumindest abschnittsweise kalottenartig (d. h. in Form einer vorzugsweise kugelartigen Mulde) ausgebildet, sodass eine Berührungsfläche zwischen dem Freiende des Kontaktstifts und dem ersten Gegenkontakt möglichst groß ist.

Weiter vorzugsweise ist der zweite Gegenkontakt analog zu dem Kontaktmantel konzentrisch zu dem ersten Gegenkontakt angeordnet und umgibt diesen ringförmig geschlossen. Dadurch wird vorteilhafterweise auch im mit den Ladekontaktanschluss gekoppelten Zustand eine Verdrehung der beiden Anschlüsse zueinander (d. h. insbesondere um die mit dem Kontaktstift zusammenfallende Drehachse des Ladekontaktanschlusses) ermöglicht.

Das erfindungsgemäße Ladekontaktsystem dient entsprechend ebenfalls zum Laden des elektrischen Geräts, insbesondere des vorstehend genannten Hörgeräts, und weist dazu den vorstehend beschriebenen Ladekontaktanschluss sowie den vorstehend beschriebenen, dem elektrischen Gerät bzw. dem Hörgerät zugeordneten Gegenkontaktanschluss auf.

Da das Ladekontaktsystem den Ladekontaktanschluss und den Gegenkontaktanschluss umfasst, weist das Ladekontaktsystem die vorstehend beschriebenen Merkmale und Vorteile des Ladekontaktanschlusses gleichermaßen auf.

Das erfindungsgemäße Hörgerät, das vorzugsweise ein Hörhilfegerät bildet, weist den vorstehend beschriebenen Gegenkontaktanschluss zur elektrischen Kontaktierung mit dem vorstehend beschriebenen Ladekontaktanschluss auf. Der Gegenkontaktanschluss weist mithin den ersten Gegenkontakt zur Kontaktierung mit dem Kontaktstift sowie den zweiten, den ersten Gegenkontakt ringartig umgebenden Gegenkontakt zur Kontaktierung mit der Kontaktfläche des Kontaktmantels auf. Dabei ist zumindest der zweite Gegenkontakt aus ferrimagnetischem oder ferromagnetischem Material gebildet.

Vorzugsweise ist der zweite Gegenkontakt nicht dauerhaft magnetisiert. Bevorzugt weist der Gegenkontaktanschluss kein dauerhaft magnetisiertes Element auf. Dadurch kann eine Beeinflussung von Hörgerätekomponenten (beispielsweise von Mikrofonen und/oder Lautsprechern) im bestimmungsgemäßen Betrieb des Hörgeräts (d. h. nicht während des Ladevorgangs) vorteilhaft vermieden werden.

In einer hinsichtlich der Ausnutzung von zur Verfügung stehendem Bauraum vorteilhaften Ausführung ist der Gegenkontaktanschluss vorzugsweise nach Art eines sogenannten "surface mounted device" (kurz: "SMD") direkt auf einer Leiterplatte des Hörgeräts positioniert sowie auf der gleichen Seite der Leiterplatte mit zugeordneten Leiterbahnen kontaktiert.

In einer weiteren vorteilhaften Ausführung ist der Gegenkontaktanschluss gegenüber einer Außenfläche eines Außengehäuses des Hörgeräts in Richtung auf den Gehäuseinnenraum zurückversetzt. Dadurch wird insbesondere das Risiko eines Hautkontakts des Hörgeräteträgers mit beiden Gegenkontakten verringert.

Vorzugsweise weist der Gegenkontaktanschluss einen Durchmesser von etwa 3-4 Millimetern, vorzugsweise um 3,5 Millimeter bei einer Höhe von 0,5-2 Millimetern, vorzugsweise um etwa 1 Millimeter auf. Entsprechend weist vorzugsweise auch der Ladekontaktanschluss einen vergleichbaren Durchmesser des Kontaktmantels auf. Der gegebenenfalls vorhandene Überstand des Freiendes des Kontaktstifts beträgt vorzugsweise zwischen 0,5 und 1,5 Millimeter.

In einer auch eine eigenständige Erfindung bildenden Ausführung ist der Ladekontaktanschluss Teil eines Ladekabels, das mit einer Energiequelle oder einem Verbindungsmittel zu einer solchen verbunden oder verbindbar ist. Zumindest im mit der Energiequelle bzw. dem Verbindungsmittel verbundenen Zustand bildet dieses Ladekabel das vorstehend genannte Ladegerät. Bspw. handelt es sich bei dem Verbindungsmittel um ein Netzteil (ggf. ein Ladenetzteil), das mit einem stationären Energienetz verbindbar und zum Transformieren der aus diesem entnommenen Energie auf ein zum Laden des elektrischen Geräts erforderlichen Betrag (sowie im Fall des Ladenetzteils zum Überwachen des Ladevorgangs) eingerichtet ist. Bei der Energiequelle handelt es sich bspw. um einen tragbaren Akkumulator, auch als "Powerbank" bezeichnet, ein anderes elektrisches Gerät, das eine Ladeenergie zur Verfügung stellen kann (bspw. ein Laptop oder dergleichen, der über einen USB-Anschluss auch angeschlossene elektrische Geräte mit Energie versorgen kann). Insbesondere für den Fall, dass der Gegenkontaktanschluss in einem Hörgerät verbaut ist, kann die Energiequelle auch durch ein sogenanntes "Neckband", eine Art Halskette oder dergleichen gebildet sein, das einen Zusatzakkumulator umfasst und das mit dem Ladekabel verbindbar ist.

In einer ebenfalls eine eigenständige Erfindung bildenden Ausführung ist der Ladekontaktanschluss Teil eines portablen (wiederaufladbaren) Batteriemoduls. Dieses kann mittels des Ladekontaktanschlusses an das den Gegenkontaktanschluss aufweisende elektrische Gerät, insbesondere das Hörhilfegerät als eine Art Erweiterung angeschlossen werden. Optional ist das Batteriemodul mit einer Schnellladefunktion ausgestattet, das eine vergleichsweise schnelle Energieübertragung von dem Batteriemodul auf das Energiespeicherelement des elektrischen Geräts, insbesondere des Hörgeräts ermöglicht. Alternativ ist das Batteriemodul dazu eingerichtet, als eine Art "Notfall-Energiequelle" für den weiteren Betrieb (d. h. bis ein stationäres Laden des elektrischen Geräts wieder möglich ist) an dem elektrischen Gerät, insbesondere dem Hörgerät als eine Art "Anbaustück" zu verbleiben.

Nachfolgend wird ein Ausführungsbeispiel der Erfindung anhand einer Zeichnung näher erläutert. Darin zeigen:
- Fig. 1: in einer schematischen Perspektivansicht ein Hörgerät mit einem Gegenkontaktanschluss zum Anschluss eines Ladekontaktanschlusses für das Laden einer in dem Hörgerät verbauten wieder aufladbaren Batterie,
- Fig. 2: in einer schematischen Detailansicht des Hörgeräts den Gegenkontaktanschluss,
- Fig. 3: in einer schematischen Perspektivansicht das Hörgerät und den Ladekontaktanschluss zur Kontaktierung des Gegenkontaktanschlusses,
- Fig. 4: in einer schematischen Einzelteilansicht den Gegenkontaktanschluss,
- Fig. 5: in Ansicht gemäß Fig. 4 den Ladekontaktanschluss,
- Fig. 6: in einer schematischen Teilschnittansicht das aus dem Ladekontaktanschluss und dem Gegenkontaktanschluss gebildete Ladekontaktsystem im gekoppelten Zustand,

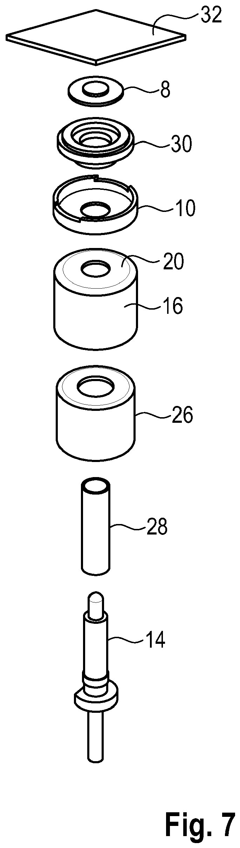

- Fig. 7: in einer schematischen Explosionsdarstellung das Ladekontaktsystem, und
- Fig. 8, 9: jeweils in einer schematischen Darstellen das Hörgerät mit unterschiedlichen Anwendungsbeispielen des Ladekontaktsystems.

Einander entsprechende Teile sind in allen Figuren stets mit gleichen Bezugszeichen versehen.

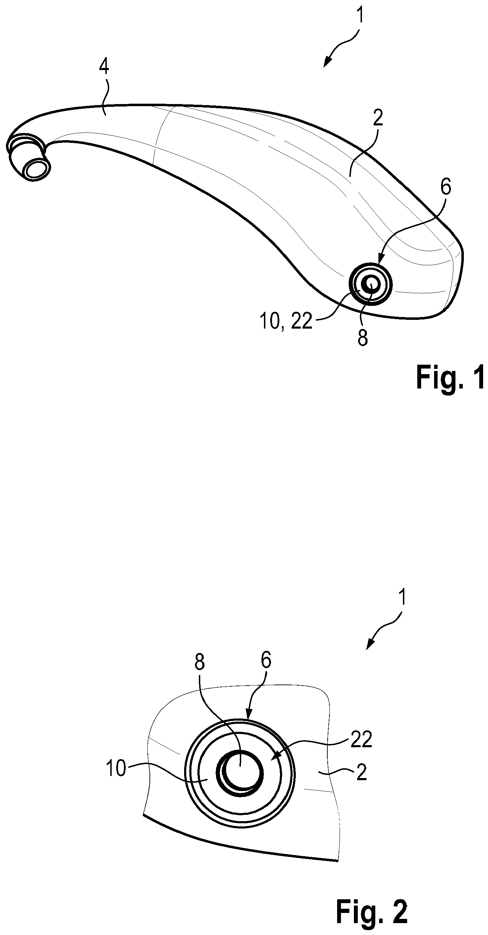

In Fig. 1 ist ein Hörgerät 1 dargestellt. Dieses Hörgerät 1 weist ein Außengehäuse 2 sowie einen daran befestigten Traghaken 4 auf. Das Hörgerät 1 umfasst zum Betrieb seiner elektrischen Komponenten (nicht näher dargestellte Mikrofone, ein Lautsprecher, ein Signalprozessor sowie gegebenenfalls ein Kommunikationsmodul) eine wieder aufladbare Batterie. Um diese zum Aufladen nicht aus dem Außengehäuse 2 entnehmen zu müssen, weist das Hörgerät 1 einen Ladeanschluss 6 auf, der einen Gegenkontaktanschluss zu einem im Folgenden näher beschriebenen Ladekontaktanschluss bildet. Des Weiteren weist das Hörgerät 1 auch eine der wieder aufladbaren Batterie zugewiesene Ladeelektronik auf, die dazu eingerichtet ist, den Ladevorgang sowie den Ladestand der Batterie zu überwachen.

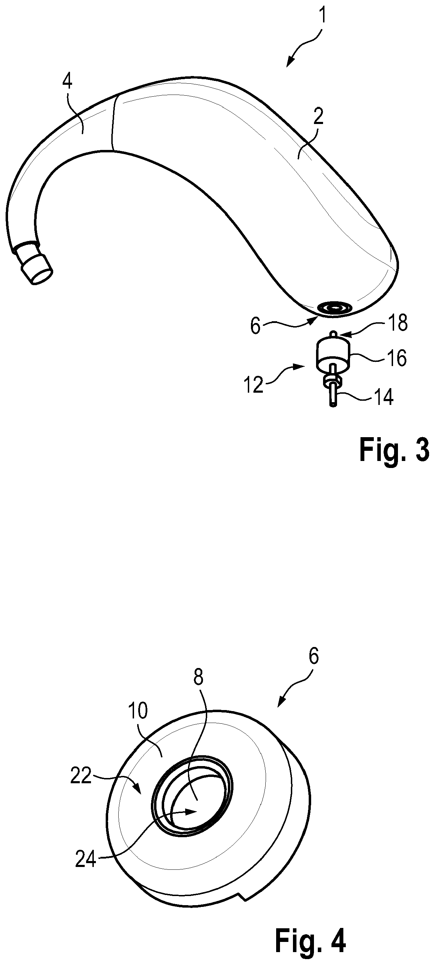

Der Ladeanschluss 6 weist zwei konzentrisch zueinander angeordnete Kontaktelemente, konkret ein zentrales, erstes Kontaktstück 8 sowie ein dieses ringförmig umgebendes zweites Kontaktstück 10 auf (s. Fig. 2, 4). Das erste und das zweite Kontaktstück 8, 10 bilden dabei jeweils einen Gegenkontakt für korrespondierende Kontaktelemente des Ladekontaktanschlusses.

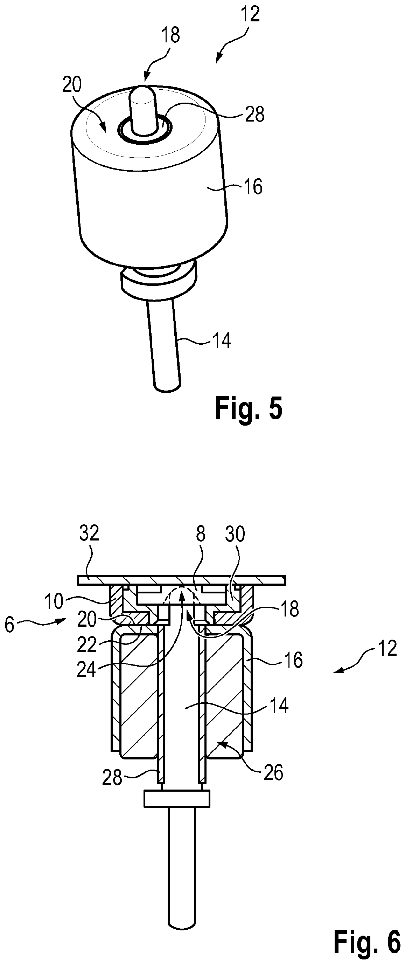

Wie aus Fig. 3 und 5 zu entnehmen ist, weist der Ladekontaktanschluss (im Folgenden kurz als "Ladestecker" 12 bezeichnet) ebenfalls zwei konzentrisch zueinander angeordnete sowie rotationsymmetrisch ausgebildete Kontaktelemente auf. Bei diesen handelt es sich um einen zentral angeordneten Kontaktstift 14, konkret einen Federkontaktstift (auch: "Pogo Pin"), und einen diesen hülsenartig umgebenden Kontaktmantel 16. Der Kontaktstift 14 steht dabei freiendseitig mit einem Kontaktende 18 über eine Kontaktfläche 20 des Kontaktmantels 16 über. Die Kontaktfläche 20 ist senkrecht zur Längserstreckung oder Längsachse des Kontaktstifts 14 ausgerichtet.

Die Kontaktfläche 20 des Ladesteckers 12 liegt in einem bestimmungsgemäßen Kopplungszustand (s. Fig. 6) an einer korrespondierenden Kontaktfläche 22 des Ladeanschlusses 6 an. Das Kontaktende 18 liegt dabei in einer kalottenartigen Kontaktmulde 24 des ersten Kontaktstücks 8 ein. Das erste Kontaktstück 8 ist dabei gegenüber der Kontaktfläche 22 des zweiten Kontaktstücks 10 zurückversetzt. Dadurch entfaltet der Kontaktstift 14 mit seinem Kontaktende 18 eine zentrierende Wirkung bei der Kopplung des Ladesteckers 12 mit dem Ladeanschluss 6.

Um die Kopplung des Ladesteckers 12 mit dem Ladeanschluss 6 zu unterstützen sowie um diese während des Ladevorgangs aneinander zu halten, weist der Ladestecker 12 ein Magnetelement in Form einer Magnethülse 26 auf. Diese ist in den topfartig geformten Kontaktmantel 16 eingepasst und mit diesem auf den Kontaktstift 14 aufgesteckt (s. Fig. 6). Die Magnethülse 26 ist permanentmagnetisch sowie elektrisch leitfähig ausgebildet. Aufgrund der elektrischen Leitfähigkeit der Magnethülse 26 kann der Kontaktmantel 16 unter Einsparung von Bauraum sowie zusätzlichen Bauelementen mit einer dem Ladestecker 12 zugeordneten elektrischen Leitung kontaktiert werden. Zur Isolierung des Kontaktmantels 16 sowie der Magnethülse 26 gegenüber dem Kontaktstift 14 ist auf letzteren ein elektrisch isolierendes Material in Form einer Isolierhülse 28 aufgebracht.

Das zweite Kontaktstück 10 (optional auch das erste Kontaktstück 8) ist aus einem ferri- oder ferromagnetischen Material gebildet, sodass die Magnethülse 26 eine magnetische Anziehungskraft auf dieses ausüben kann.

Zur elektrischen Isolation des ersten und des zweiten Kontaktstücks 8, 10 voneinander ist zwischen diesen als isolierendes Zwischenstück ein Isolierring 30 angeordnet. Bei diesem handelt es sich um ein Kunststoff-Spritzgießteil. In einer optionalen Variante weist dieser Isolierring 30 ferri- oder ferromagnetisches Material auf. In diesem Fall kann das zweite Kontaktstück 10 auch unmagnetisch ausgebildet sein.

Wie in Fig. 6 weiter dargestellt ist, ist der Ladeanschluss 6 direkt auf einer Leiterplatte 32 des Hörgeräts 1 angeordnet und nach Art eines SMD mit korrespondierenden Leiterbahnen dieser Leiterplatte 32 kontaktiert. Konkret stehen dabei das erste Kontaktstück 8 und das zweite Kontaktstück 10 jeweils unmittelbar mit korrespondierenden Leiterbahnen der Leiterplatte 32 in leitfähiger Verbindung.

Der Ladestecker 12 ist in einer Anwendungsvariante in ein Ladegerät, das eine Ladeschale zur Aufnahme des Hörgeräts 1 aufweist, integriert.

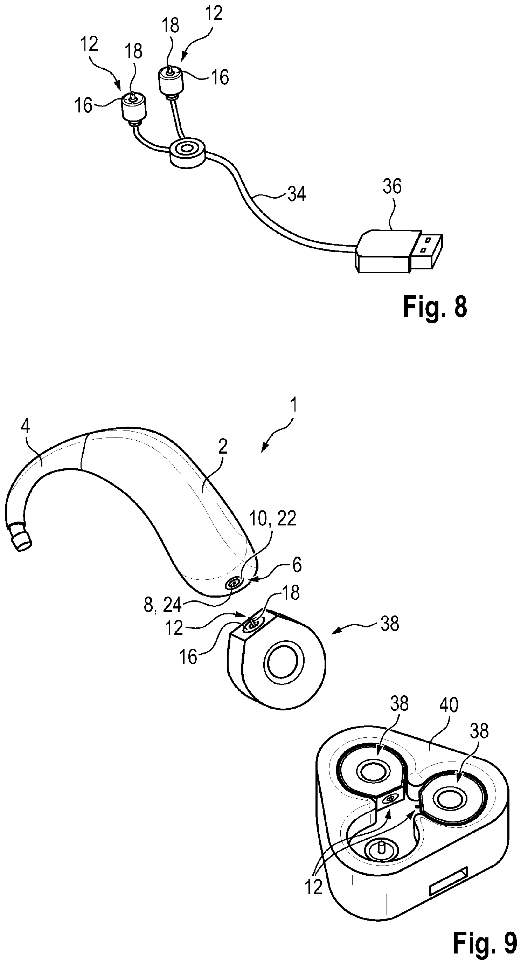

In einer alternativen Anwendungsvariante, schematisch dargestellt in Fig. 8 stellt der Ladestecker 12 ein Endstück eines Ladekabels 34 dar, mittels dessen eine Energiequelle (bspw. eine Powerbank, ein Laptop, ein Neckband, ein Ladenetzteil zum Anschluss an ein stationäres Stromnetz oder dergleichen) mit dem Hörgerät 1 verbunden wird. Konkret ist das dargestellte Ladekabel 34 Y-artig ausgebildet, wobei an den beiden Y-Schenkeln jeweils ein Ladestecker 12 (zum Anschluss an jeweils ein Hörgerät 1) und am anderen Ende ein USB-Stecker 36 zum Anschluss an die Energiequelle angeordnet sind.

In Fig. 9 ist schematisch eine weitere Variante einer Anwendung des Ladesteckers 12 dargestellt. Der Ladestecker 12 ist hierbei direkt in ein Batteriepack 38 integriert, das zum Laden und/oder Aufrechterhalten des Betriebs des Hörgeräts 1 mittels des Ladestreckers 12 und des Ladeanschlusses 6 an das Hörgerät 1 gekoppelt werden kann. Außerdem ist in Fig. 9 auch eine Ladeschale 40 für mehrere solcher Batteriepacks 38 dargestellt. In der dargestellten Anwendung ist in der Ladeschale 40 ebenfalls für jedes Batteriepack 38 ein Ladestecker 12 angeordnet, der mit einem (nicht dargestellten) seitlich in dem jeweiligen Batteriepack 38 angeordneten Ladeanschluss 6 eine elektrische Verbindung zum Laden des Batteriepacks 38 eingeht.

In allen dargestellten Varianten ermöglichen die rotationssymmetrischen Ausgestaltungen des Ladesteckers 12 sowie des Ladeanschlusses 6 eine frei drehbare Positionierung des Hörgeräts 1 zu dem Ladestecker 12. Die Magnethülse 26 vereinfacht zusätzlich die Kopplung des Ladesteckers 12 mit dem Ladeanschluss 6.

Der Gegenstand der Erfindung ist nicht auf das vorstehend beschriebene Ausführungsbeispiel beschränkt. Vielmehr können weitere Ausführungsformen der Erfindung von dem Fachmann aus der vorstehenden Beschreibung abgeleitet werden.

### Bezugszeichenliste

- 1: Hörgerät
- 2: Außengehäuse
- 4: Traghaken
- 6: Ladeanschluss
- 8: Kontaktstück
- 10: Kontaktstück
- 12: Ladestecker
- 14: Kontaktstift
- 16: Kontaktmantel
- 18: Kontaktende
- 20: Kontaktfläche
- 22: Kontaktfläche
- 24: Kontaktmulde
- 26: Magnethülse
- 28: Isolierhülse
- 30: Isolierring
- 32: Leitplatte
- 34: Ladekabel
- 36: USB-Stecker
- 38: Batteriepack
- 40: Ladeschale

## Patentansprüche

1. Ladekontaktanschluss (12) für ein Ladegerät eines elektrischen Geräts, insbesondere eines Hörgeräts (1), mit
- einem permanentmagnetischen Magnetelement (26) zur magnetischen Anziehung eines Gegenkontaktanschlusses (6),
- einem zentralen Kontaktstift (14) zur Kontaktierung eines ersten Gegenkontakts (8) des Gegenkontaktanschlusses (6),
- einem den zentralen Kontaktstift (14) ringartig umgebenden Kontaktmantel (16), der eine schräg und/oder senkrecht zu einer Längsachse des Kontaktstifts (14) ausgerichtete Kontaktfläche (20) zur Kontaktierung eines zweiten Gegenkontakts (10) des Gegenkontaktanschlusses (6) aufweist,
wobei der Kontaktmantel (16) gegen den Kontaktstift (14) elektrisch isoliert ist, und wobei der Kontaktmantel (16) das Magnetelement (26) zumindest teilweise umgibt.

2. Ladekontaktanschluss (12) nach Anspruch 1,
wobei zumindest die Kontaktfläche (20) des Kontaktmantels (16) rotationssymmetrisch bezüglich der Längsachse des Kontaktstifts (14) ist.

3. Ladekontaktanschluss (12) nach Anspruch 1 oder 2,
wobei der Kontaktmantel (16) das Magnetelement (26) topfartig umgibt.

4. Ladekontaktanschluss (12) nach einem der Ansprüche 1 bis 3,
wobei das Magnetelement (26) elektrisch leitfähig ausgestaltet ist und eine elektrische Verbindung zwischen dem Kontaktmantel (16) und einer dem Ladekontaktanschluss (12) nachgelagerten elektrischen Leitung bildet.

5. Ladekontaktanschluss (12) nach einem der Ansprüche 1 bis 4,
wobei das Magnetelement (26) den Kontaktstift (14) hülsenartig umgibt.

6. Ladekontaktanschluss (12) nach einem der Ansprüche 1 bis 5,
wobei der Kontaktstift (14) die Kontaktfläche (20) des Kontaktmantels (16) durch eine zugeordnete Öffnung durchdringt und freiendseitig über die Kontaktfläche (20) übersteht.

7. Ladekontaktanschluss (12) nach einem der Ansprüche 1 bis 6,
wobei der Kontaktstift (14) zumindest in einem Kontaktbereich zu dem Magnetelement (26) und dem Kontaktmantel (16) mit isolierendem Material, insbesondere einer aus isolierendem Material gebildeten Hülse (28) überzogen ist.

8. Gegenkontaktanschluss (6) zum Einbau in ein elektrisches Gerät, insbesondere in ein Hörgerät (1), mit einem ersten Gegenkontakt (8) zur Kontaktierung mit dem Kontaktstift (14) des Ladekontaktanschlusses (12) gemäß einem der Ansprüche 1 bis 7, sowie mit einem zweiten, den ersten Gegenkontakt (8) ringartig umgebenden Gegenkontakt (10) zur Kontaktierung mit der Kontaktfläche (20) des Kontaktmantels (16) des Ladekontaktanschlusses (12), wobei zumindest der zweite Gegenkontakt (10) aus ferrimagnetischem oder ferromagnetischem Material gebildet ist.

9. Gegenkontaktanschluss (6) nach Anspruch 8,
wobei der erste Gegenkontakt (8) gegenüber einer Kontaktfläche (22) des zweiten Gegenkontakts (10) zurückversetzt ist, und/oder wobei der erste und der zweite Gegenkontakt (8,10) mittels eines elektrisch isolierenden Zwischenstücks (30) miteinander verbunden sind.

10. Ladekontaktsystem für ein elektrisches Gerät, insbesondere für ein Hörgerät (1), mit einem Ladekontaktanschluss (12) nach einem der Ansprüche 1 bis 7, und mit einem Gegenkontaktanschluss (6) nach Anspruch 8 oder 9.

11. Elektrisches Gerät, insbesondere Hörgerät (1) mit einem Gegenkontaktanschluss (6) zur elektrischen Kontaktierung mit einem Ladekontaktanschluss (12) nach einem der Ansprüche 1 bis 7, wobei der Gegenkontaktanschluss (6) einen ersten Gegenkontakt (8) zur Kontaktierung mit dem Kontaktstift (14) sowie einen zweiten, den ersten Gegenkontakt (8) ringartig umgebenden Gegenkontakt (10) zur Kontaktierung mit der Kontaktfläche (20) des Kontaktmantels (22) aufweist, wobei zumindest der zweite Gegenkontakt (10) aus ferrimagnetischen oder ferromagnetischen Material gebildet ist.
